# FASCICULE DE BREVET EUROPEEN

(11) **EP 3 277 952 B1**
(45) Date de publication et mention de la délivrance du brevet: **27.02.2019**
(21) Numéro de dépôt: 15720464.5
(22) Date de dépôt: 02.04.2015
(51) Int. Cl.: F03D 13/20, E04H 12/00

(54) **TRONÇON DE MÂT D'ÉOLIENNE, MÂT D'ÉOLIENNE ET PROCÉDÉ D'ASSEMBLAGE**
TEIL EINER WINDTURBINENTURM, WINDTURBINENTURM, SOWIE VERFAHREN ZUM ZUSAMMENBAU EINES WINDTURBINENTURMS
SECTION OF WIND TURBINE TOWER, WIND TURBINE TOWER AND METHOD OF ASSEMBLY

(43) Date de publication de la demande: 07.02.2018
(73) Titulaire: ArcelorMittal, 1160 Luxembourg (LU)
(72) Inventeur: GREMLING, Michaël, 4100 Seraing (BE)
(74) Mandataire: Lavoix
(86) Numéro de dépôt international: PCT/IB2015/052440
(87) Numéro de publication internationale: WO 2016/156925

(56) Documents cités:
- EP-A1- 2 006 471
- EP-A1- 2 444 571
- DE-A1-102007 039 957
- US-A1- 2010 319 276

## Description

La présente invention concerne un tronçon de mât pour éolienne, voir par exemple EP 2 006 471 A1, présentant un axe central longitudinal s'étendant suivant une direction longitudinale, le tronçon de mât comprenant au moins deux éléments de mât tubulaires empilés selon la direction longitudinale et agencés bord à bord au niveau d'un plan de jonction, chaque élément de mât comprenant au moins deux segments de paroi, connectés entre eux par des premiers connecteurs s'étendant le long des bords longitudinaux des segments de paroi, le tronçon de mât comprenant en outre des deuxièmes connecteurs s'étendant chacun à cheval sur les deux éléments de mât adjacents selon la direction longitudinale.

Les efforts d'amélioration du rendement énergétique des éoliennes ont conduit au cours du temps à une augmentation de la taille des turbines, nécessitant, pour leur support, des mâts de hauteur et de diamètre accrus. Du fait de leurs dimensions importantes, de tels mâts ne peuvent pas être transportés assemblés. Par conséquent, les mâts sont généralement transportés par portions jusqu'à leur site d'implantation, avant de procéder à leur assemblage in situ.

Plus particulièrement, il existe des procédés d'assemblage de mâts d'éolienne, selon lesquels on transporte des segments de paroi de l'éolienne jusqu'au site d'implantation de l'éolienne, puis on assemble ces segments de paroi au moyen de premiers connecteurs pour former des éléments de mât sensiblement tubulaires, généralement cylindriques ou tronconiques, lesquels sont ensuite successivement assemblés entre eux au moyen de deuxièmes connecteurs pour former le mât d'éolienne.

Compte tenu des dimensions de plus en plus importantes des mâts d'éoliennes, il est nécessaire d'améliorer la résistance mécanique de ces mâts de sorte à minimiser le risque de défaillance en cours d'utilisation, notamment par flambage, tout en limitant autant que possible les coûts de fabrication et le temps d'assemblage.

Un but de l'invention est de fournir un mât d'éolienne, éventuellement de grande hauteur, présentant une durée de vie accrue et pouvant être transporté facilement et rapidement et assemblé à moindre coût.

A cet effet, l'invention a pour objet un tronçon de mât d'éolienne dans lequel chaque deuxième connecteur s'étend dans le prolongement longitudinal d'un premier connecteur, le deuxième connecteur présentant une largeur augmentant, à partir dudit premier connecteur, d'une première largeur sensiblement égale à la largeur du premier connecteur jusqu'à une deuxième largeur strictement supérieure à la première largeur, la deuxième largeur étant atteinte avant le plan de jonction en partant du premier connecteur.

Selon des modes de réalisation particuliers, le tronçon de mât présente l'une ou plusieurs des caractéristiques suivantes, prises isolément ou selon toute combinaison techniquement possible :
- le tronçon de mât présente une forme tubulaire de section transversale polygonale, chaque côté de ce polygone définissant une facette du tronçon de mât ;
- chaque deuxième connecteur s'étend sur une facette du tronçon de mât et la deuxième largeur est supérieure ou égale à 50% de la largeur de la facette sur laquelle s'étend le deuxième connecteur considéré, prise au niveau du plan de jonction entre les éléments de mât adjacents ;
- chaque segment de paroi comprend un pan central et deux pans latéraux formant un angle avec le pan central ;
- les deuxièmes connecteurs sont symétriques par rapport à l'axe longitudinal du premier connecteur qu'ils prolongent ;
- la largeur du deuxième connecteur augmente linéairement de la première largeur jusqu'à la deuxième largeur ;
- chaque deuxième connecteur comprend une portion centrale sensiblement rectangulaire s'étendant à cheval sur les deux éléments de paroi adjacents et au moins une portion de jonction en forme de trapèze, s'étendant depuis un premier connecteur respectif jusqu'à la portion centrale, la largeur de la portion de jonction variant, depuis le premier connecteur, de la première largeur jusqu'à la deuxième largeur ;
- les bords du trapèze de la ou chaque portion de jonction en forme de trapèze forment un angle compris entre 30 et 55° avec la base du trapèze ;
- le deuxième connecteur comprend deux portions de jonction encadrant la portion centrale selon la direction longitudinale ;
- chaque deuxième connecteur est symétrique par rapport au plan de jonction ;
- les bords longitudinaux d'un segment de paroi de l'élément de mât supérieur se situent dans le prolongement des bords longitudinaux du segment de paroi adjacent de l'élément de mât inférieur ;
- les éléments de mât adjacents sont décalés angulairement les uns par rapport aux autres, et chaque deuxième connecteur s'étend d'une part à cheval sur deux pans latéraux adjacents circonférentiellement de l'un des éléments de mât et d'autre part sur un pan central de l'autre élément de mât ;
- le tronçon de mât comprend en outre des connecteurs intermédiaires disposés à cheval sur deux éléments de mât adjacents, entre deux deuxièmes connecteurs adjacents circonférentiellement ;
- chaque connecteur intermédiaire s'étend à cheval sur deux pans centraux adjacents longitudinalement des deux éléments de mât et chaque deuxième connecteur s'étend à cheval sur deux pans latéraux adjacents circonférentiellement de chacun des éléments de mât adjacents.

L'invention concerne également un mât d'éolienne comprenant un tronçon de mât tel que décrit précédemment.

L'invention décrit également un procédé d'assemblage d'un tronçon de mât tel que décrit précédemment comprenant :
- la fourniture de segments de paroi et l'assemblage de ces segments de paroi entre eux par l'intermédiaire des premiers connecteurs de sorte à former des éléments de mât ;
- l'empilement, selon la direction longitudinale, de deux éléments de mât et la connexion entre eux de ces deux éléments de mât au moyen des deuxièmes connecteurs.

L'invention sera mieux comprise à la lecture de la description qui va suivre, donnée uniquement à titre d'exemple, et faite en référence aux dessins annexés, sur lesquels :
- la figure 1 est une vue schématique d'une éolienne ;
- la figure 2 est une vue schématique en perspective d'une partie d'un tronçon de mât d'éolienne;
- la figure 3 est une vue schématique en perspective éclatée d'une partie du tronçon de mât de la figure 2 ;
- la figure 4 est une vue schématique agrandie d'une zone de jonction entre deux éléments de mât d'un tronçon de mât selon l'invention, depuis l'intérieur du mât, illustrant un exemple de deuxième connecteur ;
- la figure 5 est une vue analogue à la figure 4, illustrant un autre exemple de deuxième connecteur ;
- la figure 6 est une vue schématique en perspective éclatée d'une partie d'un tronçon de mât ;
- la figure 7 est une vue schématique en perspective d'une partie d'un tronçon de mât d'éolienne selon un premier mode de réalisation ;
- la figure 8 est une vue schématique de dessus du tronçon de mât d'éolienne de la figure 7 ;
- la figure 9 est une vue schématique en perspective éclatée d'une partie du tronçon de mât de la figure 7, seuls certains organes de connexion étant représentés ;
- la figure 10 est une vue schématique en perspective d'une partie d'un tronçon de mât d'éolienne selon un deuxième mode de réalisation ; et
- la figure 11 est une vue de dessus du tronçon de mât d'éolienne de la figure 10.

Dans toute la description, on entend par « connexion » la fixation mécanique par un organe de connexion, et en particulier la fixation par boulonnage ou par vissage. Ce terme ne recouvre donc notamment pas la fixation par soudage ou par brasage.

L'emploi de boulons ou de vis pour réaliser les connexions permet de gérer au mieux le comportement en fatigue du tronçon de mât en choisissant les emplacements et la densité des boulons ou des vis en fonction des impératifs de résistance et d'endurance à la fatigue. Par ailleurs, l'absence de soudures au sein du tronçon de mât et du mât d'éolienne permet d'éviter la présence de zones affectées thermiquement, ce qui garantit une homogénéité des performances des aciers et supprime les points faibles engendrés par ces zones affectées thermiquement.

On entend par « hauteur », la dimension d'un élément suivant la direction longitudinale et par « largeur », la dimension de cet élément perpendiculairement à la direction longitudinale.

Dans toute la description, on entend par « bords longitudinaux » d'un élément, les bords de cet élément s'étendant selon la direction longitudinale. On entend par « bords transversaux », les bords de cet élément s'étendant perpendiculairement à la direction longitudinale.

Les termes « haut » et « bas », « en-dessous » et « au-dessus » et « inférieur » et « supérieur » sont utilisés par rapport à l'orientation normale du mât d'éolienne 2 sur son site d'implantation.

Dans toute la description, on entend par « décalage angulaire » la rotation d'un élément constitutif du mât selon l'axe longitudinal central L comparativement à un élément adjacent.

Dans toute la description, les éléments constitutifs du mât, du tronçon de mât et des éléments de mât sont de préférence réalisés en métal, en particulier en acier, et tout particulièrement à partir de bobines ou de plaques d'acier.

Le tronçon de mât 1 pour éolienne suivant l'invention est destiné à former une partie d'un mât 2 d'une éolienne 3.

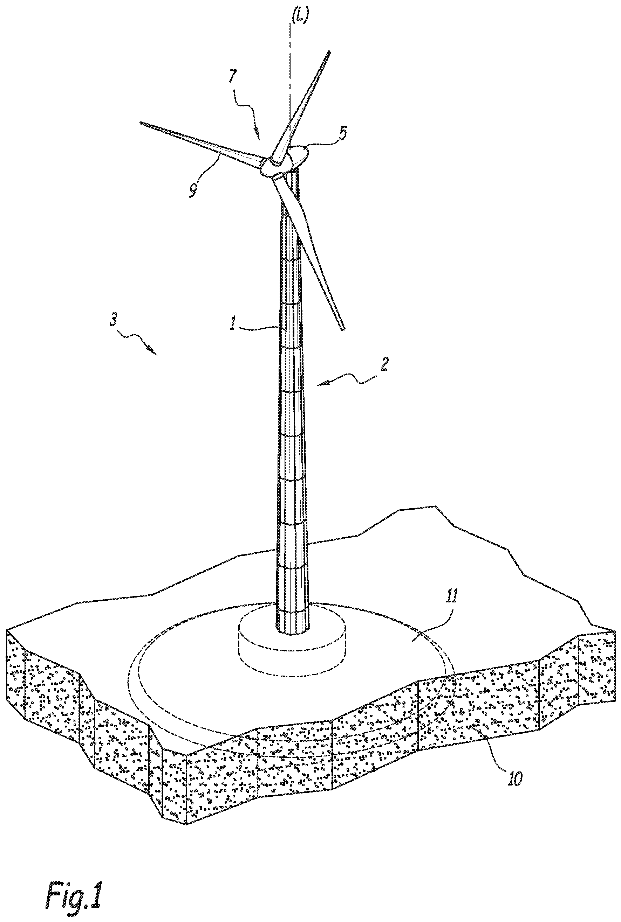

De manière classique, et comme illustré sur la figure 1, l'éolienne 3 comprend, à son extrémité supérieure, une nacelle 5 et un rotor 7 monté sur la nacelle 5. La nacelle 5, montée à l'extrémité supérieure du mât 2, abrite des composants mécaniques, électriques et électroniques pour le fonctionnement de l'éolienne 3. Le rotor 7 comprend une pluralité de pales 9 destinées à être entraînées en rotation autour d'un axe du rotor 5 par l'énergie du vent. A son extrémité inférieure, le mât d'éolienne 2 est destiné à être ancré dans le sol 10 du site d'implantation, partout moyen connu de l'homme du métier, notamment par des fondations 11 adaptées.

Le tronçon de mât 1 selon l'invention présente une forme tubulaire d'axe longitudinal central L s'étendant suivant une direction longitudinale. Lorsque le tronçon de mât 1 est installé sur son site d'implantation, la direction longitudinale s'étend suivant la verticale du site d'implantation.

Dans les exemples illustrés sur les figures, le tronçon de mât 1 présente une forme tronconique, se rétrécissant vers le haut du mât 2.

On entend par « cône » toute surface réglée définie par une génératrice passant par un sommet et un point variable décrivant une courbe directrice.

A titre d'exemple, le tronçon de mât 1 présente un diamètre extérieur de l'ordre de 7 à 11 mètres, et par exemple égal à 9 mètres, à son extrémité inférieure, et de l'ordre de 2 à 4 mètres, et par exemple égal à 4 mètres, à son extrémité supérieure. Ces diamètres peuvent cependant être adaptés en fonction d'impératifs de résistance, de connexion à la nacelle ou liés au site d'installation.

Le tronçon de mât 1 présente de préférence une section transversale polygonale. Chaque côté de ce polygone définit une facette de la paroi du tronçon de mât 1.

Une forme tronconique polygonale présente l'avantage de se rapprocher au mieux de la forme tronconique à base circulaire, qui est la forme présentant la meilleure résistance au vent quelle que soit l'orientation de celui-ci et la meilleure inertie, tout en étant très simple à fabriquer, puisqu'elle peut notamment être réalisée à partir de segments de paroi obtenus par simple pliage ou profilage de tôles métalliques.

Selon une variante, le tronçon de mât 1 présente une forme cylindrique à base polygonale de section transversale constante.

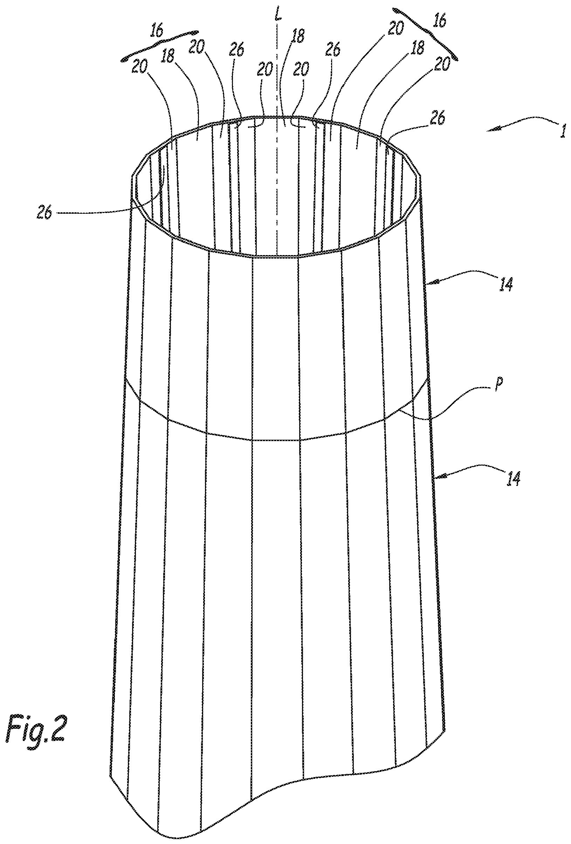

Comme cela est illustré sur la figure 2, le tronçon de mât 1 comprend au moins deux éléments de mât 14, empilés selon la direction longitudinale. Les éléments de mât 14 adjacents du tronçon de mât 1 sont agencés bord à bord, le long d'un plan de jonction P, moyennant les jeux nécessaires à l'assemblage.

Chaque élément de mât 14 présente une forme tubulaire, d'axe longitudinal central confondu avec l'axe longitudinal central L du tronçon de mât 1. Il présente une forme générale analogue à celle du tronçon de mât 1.

Dans les exemples représentés, l'élément de mât 14 présente une forme tronconique, de préférence à base polygonale, se rétrécissant vers le haut de l'élément de mât 14.

Lorsque le tronçon de mât 1 présente une forme cylindrique à base polygonale, l'élément de mât 14 présente également une forme cylindrique à base polygonale.

Chaque élément de mât 14 comprend une pluralité de segments de paroi 16 connectés entre eux par leurs bords longitudinaux. Les segments de paroi 16 adjacents d'un élément de mât 14 sont agencés bord à bord, le long d'une ligne de jonction, moyennant les jeux nécessaires à l'assemblage.

Le fait que les éléments de mât 14 soient formés d'une pluralité de segments de paroi 16 connectés entre eux évite d'être limité par le transport en ce qui concerne le diamètre final de l'élément de mât 14. En effet, les segments de paroi 16 sont relativement peu encombrants et peuvent donc être transportés par des camions standards. Ils peuvent ensuite être assemblés directement sur le site d'implantation pour obtenir des éléments de mât 14 présentant le diamètre souhaité.

Par ailleurs, la conception basée sur l'assemblage de petits éléments permet d'effectuer le transport par des véhicules compacts et légers, ce qui permet de considérer de nouveaux sites d'implantation jusqu'alors inenvisageables car difficilement carrossables pour des transports lourds tels que les transports dits exceptionnels.

A titre d'exemple, l'épaisseur des segments de paroi 16 varie en fonction de leur position le long du mât 2, en diminuant de la base vers le sommet du mât 2. Les segments de paroi 16 présentent par exemple une épaisseur égale à 30 mm à la base du mât 2 et à 16 mm au somment du mât 2.

Dans l'exemple représenté à la figure 2, chaque segment de paroi 16 comprend un pan central 18 et deux pans latéraux 20. Chaque pan latéral 20 s'étend à partir d'un bord longitudinal respectif du pan central 18, en formant un angle obtus avec le pan central 18. Les pans latéraux 20 rigidifient les segments de paroi 16 et augmentent la résistance desdits segments 16 à la flexion suivant la direction longitudinale. Ce type de segment de paroi 16 présente également l'avantage d'être facilement obtenu par simple pliage d'une feuille métallique.

La réunion des pans latéraux 20 adjacents de deux segments de paroi 16 adjacents d'un élément de mât 14 forme une facette de l'élément de mât 14. Chaque pan central 18 d'un segment de paroi 16 forme également une facette de l'élément de mât 14.

Chaque facette du tronçon de mât 1 associé correspond alors à la réunion des facettes adjacentes longitudinalement des éléments de mât 14 empilés.

Les segments de paroi 16 sont assemblés entre eux par des premiers connecteurs 26 s'étendant le long des bords longitudinaux des segments de paroi 16. Les premiers connecteurs 26 sont rapportés sur les segments de paroi 16. Chaque premier connecteur 26 s'étend à cheval sur deux segments de paroi 16 adjacents d'un élément de mât 14. Il est fixé sur les pans latéraux 20 adjacents des deux segments de paroi 16 adjacents de l'élément de mât 14.

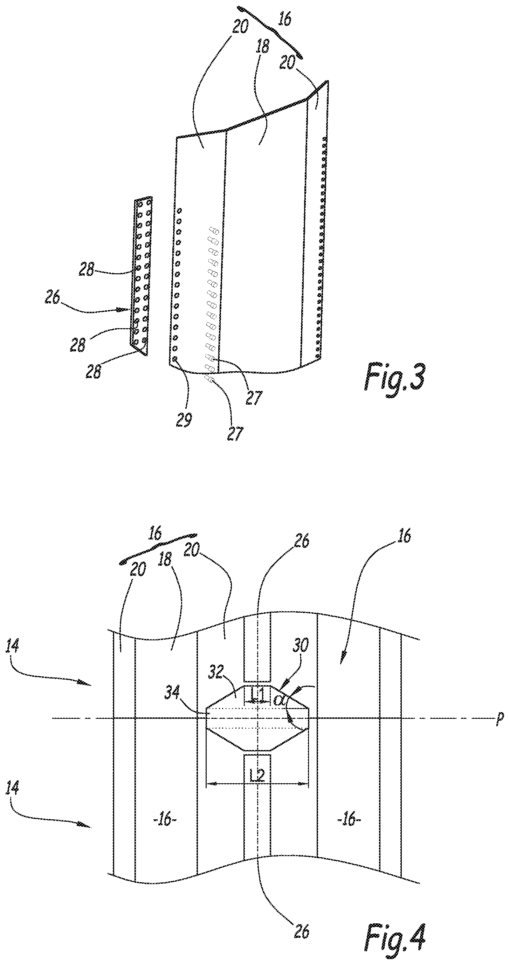

Comme cela est illustré schématiquement sur la figure 3, chaque premier connecteur 26 est fixé sur les segments de paroi 16 correspondants par l'intermédiaire de premiers organes de connexion 27, notamment des vis ou des boulons. A cet effet, les premiers connecteurs 26 comprennent des orifices de connexion 28 destinés à recevoir les premiers organes de connexion 27. Ces orifices de connexion 28 sont organisés en forme de lignes. Les segments de paroi 16 comprennent également des orifices de connexion 29 organisés selon un réseau coïncidant avec celui des orifices de connexion 28 des premiers connecteurs 26.

Pour des raisons de simplification des dessins, les premiers organes de connexion 27 et les orifices de connexion 28, 29 ne sont représentés que sur certaines des figures.

Les premiers connecteurs 26 sont plans. Ils sont avantageusement réalisés par simple découpage à partir d'une tôle d'acier.

Les premiers connecteurs 26 sont disposés à l'intérieur du tronçon de mât 1.

De préférence, chaque premier connecteur 26 s'étend sur la majeure partie de la hauteur de l'élément de mât 14. Avantageusement, il s'étend sur au moins 60% de la hauteur de l'élément de mât 14, et plus particulièrement sur au moins 80% de la hauteur de l'élément de mât 14. Cette configuration permet d'améliorer la transmission des efforts au sein du tronçon de mât 1.

Chaque élément de mât 14 peut comprendre un seul premier connecteur 26 s'étendant sur sensiblement toute la hauteur de l'élément de mât 14 ou plusieurs premiers connecteurs 26, s'étendant dans le prolongement longitudinal les uns des autres et s'étendant conjointement sur sensiblement toute la hauteur de l'élément de mât 14.

De préférence, la largeur des premiers connecteurs 26 est constante sur toute leur hauteur. Chaque premier connecteur 26 présente, dans les exemples illustrés, une forme rectangulaire allongée suivant la direction longitudinale.

A titre d'exemple, la largeur des premiers connecteurs 26 est inférieure ou égale à 40% de la largeur de la facette de paroi de l'élément de mât 14 formée par la connexion des pans latéraux 20 des deux segments de paroi 16 de l'élément de mât 14 au moyen dudit premier connecteur 26. Plus particulièrement, elle est inférieure ou égale à 30% de cette largeur. Cette largeur peut être adaptée pour chaque connecteur 26 du tronçon de mât 1 en fonction des efforts que le connecteur 26 devra supporter. De préférence, pour des raisons économiques et de logistique sur chantier, tous les premiers connecteurs 26 du tronçon de mât 1 présentent la même largeur.

Le tronçon de mât 1 comprend en outre des moyens de connexion entre eux des deux éléments de mât 14 adjacents selon la direction longitudinale.

Ces moyens de connexion comprennent des deuxièmes connecteurs 30, s'étendant chacun à cheval sur deux éléments de mât 14 adjacents selon la direction longitudinale, dans le prolongement longitudinal d'un premier connecteur 26 respectif. Les deuxièmes connecteurs 30 sont disposés à l'intérieur du tronçon de mât 1.

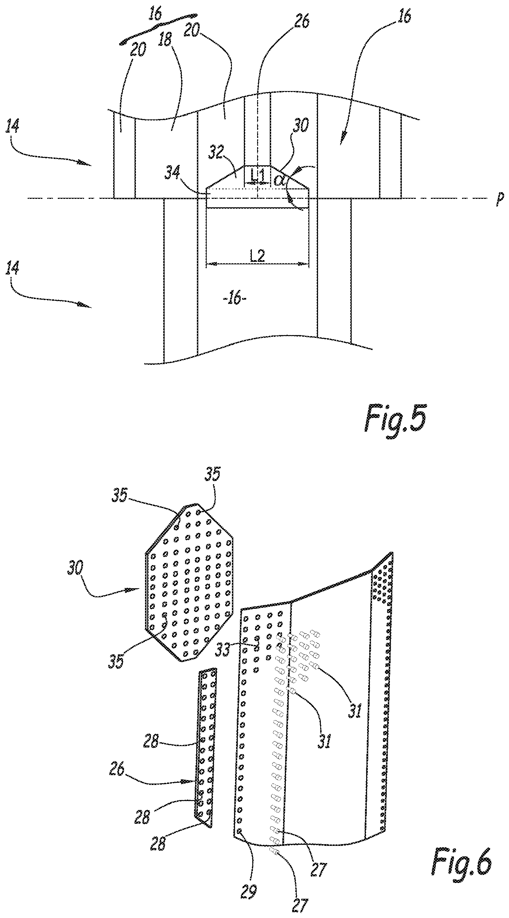

Les figures 4 et 5 illustrent des exemples de deuxièmes connecteurs 30 selon l'invention.

Dans le cas d'un tronçon de mât 1 présentant des facettes, chaque deuxième connecteur 30 s'étend sur une facette du tronçon de mât 1, à cheval sur les facettes adjacentes longitudinalement des éléments de mât 14 connectés entre eux par ce deuxième connecteur 30.

De préférence, les deuxièmes connecteurs 30 sont symétriques par rapport à un axe longitudinal central des premiers connecteurs 26.

Les deuxièmes connecteurs 30 sont sensiblement plans. Ils sont réalisés d'une pièce. Ils sont avantageusement obtenus par simple découpage à partir d'une tôle en acier.

Comme représenté sur les figures 4 et 5, les deuxièmes connecteurs 30 présentent une largeur variable selon la direction longitudinale. Plus particulièrement, pour chaque deuxième connecteur 30, la largeur augmente, à partir du premier connecteur 26 qu'il prolonge, et en s'éloignant de celui-ci, d'une première largeur L1 sensiblement égale à la largeur du premier connecteur 26 jusqu'à une deuxième largeur L2, strictement supérieure à la première largeur.

La deuxième largeur L2 est atteinte avant le plan de jonction P en partant du premier connecteur 26. Le deuxième connecteur 30 présente ainsi la deuxième largeur L2 de part et d'autre du plan de jonction P.

Cette variation de la largeur des deuxièmes connecteurs 30 résulte en une réduction notable des contraintes maximales dans les deuxièmes connecteurs 30.

Les inventeurs ont constaté que les contraintes maximales dans les deuxièmes connecteurs 30 sont notablement plus faibles que si l'on utilise des deuxièmes connecteurs de largeur constante égale à la première largeur ou à la deuxième largeur sur toute leur hauteur. Ainsi, grâce à l'utilisation des deuxièmes connecteurs 30, le tronçon de mât 1 selon l'invention présente une résistance mécanique améliorée, ce qui autorise la fabrication de mâts de grande hauteur avec un risque de flambage réduit, et augmente ainsi la durée de vie de tels mâts. Par ailleurs, ces connecteurs sont simples à fabriquer et permettent une connexion simple et peu coûteuse entre éléments de mât 14.

La forme des deuxièmes connecteurs 30 est particulièrement utile du fait que le connecteur 30 s'étend à cheval sur au moins trois segments de paroi 16, comprenant deux segments adjacents circonférentiellement et au moins un segment adjacent longitudinalement, comme illustré sur les figures 4 et 5. En effet, de ce fait, les deuxièmes connecteurs 30 sont situés à cheval sur une ligne de jonction longitudinale entre segments de paroi 16 adjacents circonférentiellement et sur une ligne de jonction transversale entre deux segments de paroi 16 adjacents longitudinalement, et sont ainsi sollicités en rigidité de façon multi-directionnelle. Or, les deuxièmes connecteurs 30, de par leur forme particulière, sont particulièrement adaptés pour résister à de telles sollicitations.

La hauteur de la partie de largeur L2 du deuxième connecteur 30 est choisie en fonction des contraintes verticales à reprendre à la jonction entre les deux éléments de mât 14.

De préférence, la première largeur L1 du deuxième connecteur 30 est comprise entre 1 fois et 1,2 fois la largeur du premier connecteur 26 qu'il prolonge. Ceci permet de minimiser un changement brusque de rigidité à la jonction du premier connecteur 26 et du deuxième connecteur 30, ce qui limite la concentration de contraintes à ce niveau. De préférence la première largeur L1 est égale à la largeur du premier connecteur 26.

De préférence, le ratio de ces largeurs L1 sur L2 est compris entre 2 et 10. Ceci optimise les flux de contraintes au niveau de la transition entre deux éléments de mât 14 adjacents.

Dans le cas d'un tronçon de mât 1 présentant des facettes, la deuxième largeur L2 est inférieure ou égale à la largeur de la facette du tronçon de mât 1 sur laquelle s'étend le deuxième connecteur 30, prise au niveau du plan de jonction P entre les deux éléments de mât 14.

Elle est avantageusement supérieure à environ 50% de la largeur de cette facette. Plus particulièrement, elle est supérieure à 70% de la largeur de cette facette.

De préférence, la largeur des deuxièmes connecteurs 30 augmente linéairement entre la première largeur L1, au niveau du premier connecteur 26, et la deuxième largeur L2. Cette forme constitue le meilleur compromis entre les performances mécaniques et le coût de fabrication.

Avantageusement, le deuxième connecteur 30 comprend une portion de jonction 32 en forme de trapèze dont la largeur augmente de la largeur L1 jusqu'à la largeur L2 en s'éloignant du premier connecteur 26. Cette portion de jonction 32 est prolongée longitudinalement, en s'éloignant du premier connecteur 26, par une portion centrale 34 de largeur L2. La portion centrale 34 s'étend, en particulier symétriquement, à cheval sur les deux éléments de mât 14 adjacents.

De préférence, les bords du trapèze de la portion de jonction 32 forment un angle α compris entre 30° et 55° avec la base du trapèze. Ceci améliore la transmission des efforts et la tenue en rigidité du deuxième connecteur 30. L'angle α est avantageusement égal à 45° pour une transmission optimale des efforts entre les éléments de mât 14 par le deuxième connecteur 30.

Comme illustré sur la figure 6, les deuxièmes connecteurs 30 sont fixés sur les éléments de mât 14 au moyen de deuxièmes organes de connexion 31, formés par exemple par des vis ou des boulons.

A titre d'exemple, chaque deuxième connecteur 30 comprend un réseau régulier d'orifices de connexion 35 destinés à recevoir les deuxièmes organes de connexion 31. Ce réseau est par exemple un réseau à maille rectangulaire, et par exemple à maille carrée. Les orifices de connexion 35 sont répartis régulièrement sur toute la surface des deuxièmes connecteurs 30. La distance entre orifices de connexion 35 adjacents est choisie de sorte à optimiser la résistance mécanique et l'endurance à la fatigue en fonction des besoins. Les segments de mât 16 comprennent un réseau d'orifices de connexion 33 coïncidant avec le réseau d'orifices de connexion 35 des deuxièmes connecteurs 30.

Avantageusement, les distances entre les orifices de connexion 28 des premiers connecteurs 26 et entre les orifices de connexion 35 des deuxièmes connecteurs 30 sont identiques de telle sorte qu'au sein du tronçon de mât 1, les lignes de premiers organes de connexion 27 s'étendent dans le prolongement de lignes de deuxièmes organes de connexion 31.

Pour des raisons de simplification des dessins, les premiers organes de connexion 31 et les orifices de connexion 35, 33 ne sont représentés que sur certaines des figures.

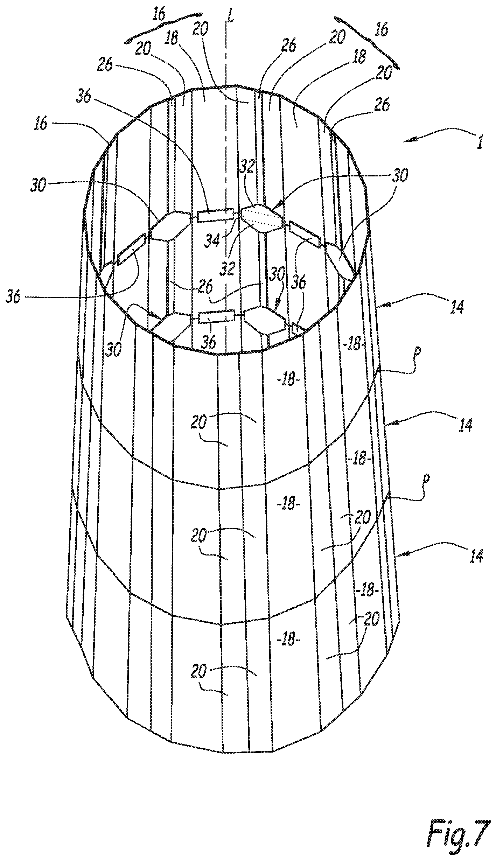

A l'appui des figures 7 à 9, on décrit maintenant plus particulièrement un tronçon de mât 1 selon un premier mode de réalisation. Ce tronçon de mât 1 présente toutes les caractéristiques décrites précédemment. Il présente également les caractéristiques plus particulières décrites dans la suite.

Dans ce premier mode de réalisation, tous les éléments de mât 14 du tronçon de mât 1 présentent la même orientation angulaire. Les bords longitudinaux d'un segment de paroi 16 de l'élément de mât 14 supérieur se situent dans le prolongement des bords longitudinaux du segment de paroi 16 adjacent de l'élément de mât 14 inférieur. Chaque premier connecteur 26 de l'élément de mât 14 supérieur est disposé dans le prolongement selon la direction longitudinale d'un premier connecteur 26 de l'élément de mât 14 inférieur.

Chaque deuxième connecteur 30 est intercalé, selon la direction longitudinale, entre un premier connecteur 26 de l'élément de mât 14 supérieur et un premier connecteur 26 de l'élément de mât 14 inférieur. Chaque deuxième connecteur 30 est positionné bord à bord avec les premiers connecteurs 26 qui l'encadrent, moyennant les jeux nécessaires à l'assemblage.

Chaque deuxième connecteur 30 est fixé, d'une part, sur deux segments de paroi 16 adjacents circonférentiellement de l'un des éléments de mât 14 et, d'autre part, sur deux segments de paroi 16 adjacents circonférentiellement de l'autre élément de mât 14. Il est ainsi disposé à cheval sur quatre segments de paroi 16.

Les deuxièmes connecteurs 30 sont symétriques par rapport au plan de jonction P entre les deux éléments de mât 14 adjacents. Ils comprennent une portion centrale 34 sensiblement rectangulaire, de largeur constante égale à la deuxième largeur L2, encadrée, selon la direction longitudinale, par deux portions de jonction 32 en forme de trapèze telles que décrites précédemment. Ainsi, dans ce mode de réalisation, les deuxièmes connecteurs 30 présentent un contour octaédrique.

Comme illustré sur la figure 7, dans le premier mode de réalisation, les moyens de connexion entre eux des éléments de mât 14 peuvent comprendre en outre des connecteurs intermédiaires 36. Les connecteurs intermédiaires 36 connectent les éléments de mât 14 entre eux au niveau des pans centraux 18 de leurs segments de paroi 16. Ils s'étendent à cheval sur les deux éléments de mât 14 adjacents en étant fixés sur les pans centraux 18 des segments de paroi 16 de ces éléments de mât 14. Ils sont disposés entre deux deuxièmes connecteurs 30 adjacents circonférentiellement. Ils s'étendent le long des bords transversaux des éléments de mât 14.

Les connecteurs intermédiaires 36 sont disposés à l'intérieur du tronçon de mât 1.

Les connecteurs intermédiaires 36 sont sensiblement plans. Ils présentent, dans l'exemple représenté, un contour rectangulaire. Ils s'étendent selon une direction d'allongement sensiblement perpendiculaire à la direction longitudinale.

Les connecteurs intermédiaires 36 présentent une largeur inférieure ou égale à la largeur de la facette de paroi du tronçon de mât 1 sur laquelle ils sont fixés, prise au niveau du plan de jonction P entre ces éléments de mât 14. Cette facette de paroi est formée par la réunion des pans centraux 20 des deux segments de paroi 16 adjacents longitudinalement. A titre d'exemple, les connecteurs intermédiaires 36 présentent une largeur supérieure ou égale à 50% de la largeur de cette facette de paroi, prise au niveau du plan de jonction P entre ces éléments de mât 14.

Les connecteurs intermédiaires 36 participent à la tenue en rigidité le long du mât 2, et plus particulièrement entre deux éléments de mât 14 adjacents. Comme ils sont sollicités uniquement selon une ligne, correspondant à l'intersection des connecteurs intermédiaires 36 avec le plan de jonction P, les problématiques liées aux variations de rigidité sont moindres en comparaison de ce qui se produit au niveau des deuxièmes connecteurs 30, qui, eux, sont situés sur une zone de jonction entre quatre segments de paroi 16 et sont donc sollicités en rigidité de façon multi-directionnelle. Par conséquent, des connecteurs intermédiaires 36 de forme rectangulaire et de longueur suffisante offrent une rigidité suffisante.

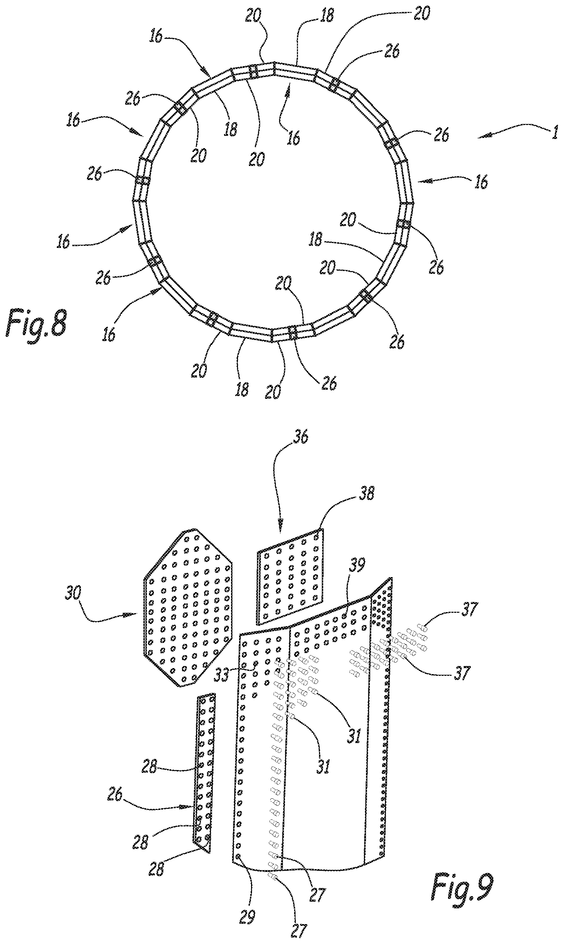

Comme illustré sur la figure 9, les connecteurs intermédiaires 36 sont fixés sur les segments de paroi 16 par l'intermédiaire de troisièmes organes de connexion 37, tels que des vis ou des boulons. Chaque connecteur intermédiaire 36 comprend un réseau régulier d'orifices de connexion 38 destinés à recevoir les troisièmes organes de connexion 37. Ce réseau est par exemple un réseau à maille rectangulaire, et par exemple à maille carrée. Les orifices de connexion 38 sont répartis régulièrement sur toute la surface des connecteurs intermédiaires 36. La distance entre orifices de connexion 38 adjacents est choisie de sorte à optimiser la résistance mécanique et l'endurance à la fatigue en fonction des besoins.

Lorsque le tronçon de mât 1 comprend des connecteurs intermédiaires 36, les segments de mât 16 comprennent un réseau d'orifices de connexion 39 coïncidant avec le réseau d'orifices de connexion 38 des connecteurs intermédiaires 36.

Pour des raisons de simplification des dessins, les troisièmes organes de connexion 37 et les orifices de connexion 38, 39 ne sont représentés que sur la figure 9.

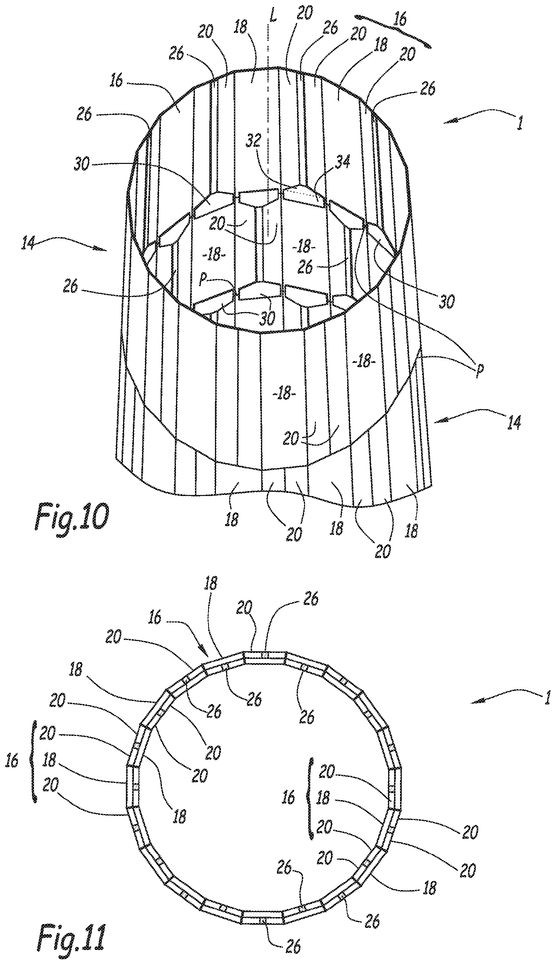

Les figures 10 et 11 illustrent plus particulièrement un tronçon de mât 1 selon un deuxième mode de réalisation.

Ce tronçon de mât 1 présente toutes les caractéristiques décrites précédemment en regard des figures 1 à 6. Il présente également les caractéristiques plus particulières décrites dans la suite.

Dans le deuxième mode de réalisation, les éléments de mât 14 adjacents longitudinalement sont décalés angulairement l'un par rapport à l'autre de sorte que les bords longitudinaux d'un segment de paroi 16 de l'élément de mât 14 supérieur ne soient pas dans le prolongement des bords longitudinaux du segment de paroi 16 adjacent longitudinalement de l'élément de mât 14 inférieur. Autrement dit, les lignes de jonction entre segments de paroi 16 adjacents circonférentiellement de l'élément de mât 14 supérieur sont décalées angulairement par rapport aux lignes de jonction entre segments de paroi 16 adjacents circonférentiellement de l'élément de mât 14 inférieur. Elles ne s'étendent pas dans le prolongement l'une de l'autre selon la direction longitudinale.

Dans le cas de segments de paroi 16 comprenant un pan central 18 et deux pans latéraux 20, chaque pan central 18 d'un segment de paroi 16 de l'élément de mât 14 supérieur s'étend en regard, selon la direction longitudinale, de deux pans latéraux 20 adjacents de l'élément de mât inférieur 14.

Ainsi, les premiers connecteurs 26 de l'élément de mât 14 supérieur sont décalés angulairement par rapport aux premiers connecteurs 26 de l'élément de mât 14 inférieur. Ils ne s'étendent pas dans le prolongement l'un de l'autre.

Dans ce deuxième mode de réalisation, compte tenu du décalage angulaire entre les éléments de mât 14 adjacents, chaque deuxième connecteur 30 est en contact, moyennant les jeux nécessaires à l'assemblage, avec un seul premier connecteur 26.

Les deuxièmes connecteurs 30 ne sont pas symétriques par rapport au plan de jonction P des deux éléments de mât 14. Ils comprennent chacun uniquement la portion centrale 34 et une seule portion de jonction 32 telle que décrite précédemment, s'étendant entre le premier connecteur 26 et la portion centrale 34. Ainsi, ils ne comprennent pas deux portions de jonction 32 comme dans le premier mode de réalisation. La forme et l'agencement de la portion centrale 34 et de l'unique portion de jonction 32 du deuxième connecteur 30 sont identiques à celles du deuxième connecteur 30 selon le premier mode de réalisation.

Dans le deuxième mode de réalisation, chaque deuxième connecteur 30 est fixé, d'une part, sur un seul segment de paroi 16 de l'un des éléments de paroi 14 et, d'autre part, sur deux segments de paroi 16 adjacents circonférentiellement de l'autre élément de mât 14. Il est ainsi disposé à cheval sur trois segments de paroi 16.

Dans le cas de segments de paroi 16 comprenant un pan central 18 et deux pans latéraux 20, les deuxièmes connecteurs 30 sont fixés d'une part sur un pan central 18 d'un segment de paroi 16 de l'un des éléments de mât 14 et d'autre part à cheval sur deux pans latéraux 20 adjacents circonférentiellement de deux segments de paroi 16 de l'autre élément de mât 14.

Dans ce mode de réalisation, le tronçon de mât 1 comprend un deuxième connecteur 30 sur chacune de ses facettes, au niveau des jonctions entre éléments de mât 14. Au niveau de chaque jonction entre éléments de mât 14, les deuxièmes connecteurs 30 sont disposés tête-bêche selon la circonférence de l'élément de mât 14. La portion de jonction 32 est ainsi disposée alternativement au-dessus et en-dessous de la portion centrale 34. En particulier, la portion de jonction 32 est orientée avec sa pointe en direction du premier connecteur 26 qu'elle prolonge. Elle est orientée avec sa pointe vers le haut lorsque le deuxième connecteur 30 prolonge le premier connecteur 26 par le bas, et vers le bas lorsque le deuxième connecteur 30 prolonge le premier connecteur 26 par le haut.

Le tronçon de mât d'éolienne 1 selon ce mode de réalisation présente tous les avantages du tronçon de mât d'éolienne 1 selon le premier mode de réalisation.

De plus, dans le deuxième mode de réalisation, le décalage circonférentiel des éléments de mât 14 améliore la résistance mécanique du tronçon de mât 1 et du mât 2 dans la mesure où les lignes de jonction entre segments de paroi 16 des éléments de mât 14 adjacents, matérialisées par les premiers connecteurs 26, ne sont pas disposées en regard selon la direction longitudinale. En effet, les zones plus faibles mécaniquement sont ainsi mieux réparties selon la circonférence du tronçon de mât 1, ce qui améliore encore la résistance mécanique du mât d'éolienne 2.

L'invention concerne également un mât d'éolienne 2 comprenant au moins un tronçon de mât 1 tel que décrit précédemment. Avantageusement, le mât d'éolienne 2 est formé par empilement, selon la direction longitudinale, de tels tronçons de mât 1.

Dans le cas du deuxième mode de réalisation, les tronçons de mât 1 sont, de préférence, également empilés de manière décalée angulairement de sorte que les lignes de jonction entre segments de paroi 16 de l'élément de mât 14 inférieur du tronçon 1 supérieur ne sont pas disposées en regard des lignes de jonction entre segments de paroi 16 de l'élément de mât 14 supérieur du tronçon 1 inférieur.

L'invention a également pour objet un procédé d'assemblage d'un tronçon de mât 1 tel que décrit précédemment.

Ce procédé d'assemblage comprend :
- la fourniture de segments de paroi 16 et l'assemblage de ces segments de paroi 16 entre eux par l'intermédiaire des premiers connecteurs 26 de sorte à former des éléments de mât 14 ;
- l'empilement, selon la direction longitudinale, de deux éléments de mât 14 et la connexion entre eux de ces deux éléments de mât 14 au moyen des deuxièmes connecteurs 30.

Selon le premier mode de réalisation, au cours de l'étape d'empilement, les deux éléments de mât 14 sont empilés avec la même orientation angulaire de telle sorte que chaque premier connecteur 26 de l'élément de mât 14 supérieur s'étende dans le prolongement, selon la direction longitudinale, d'un premier connecteur 26 de l'élément de mât 14 inférieur. Ainsi, au cours de l'étape de connexion des éléments de mât 14 entre eux, les deuxièmes connecteurs 30 sont disposés, selon la direction longitudinale, entre deux premiers connecteurs 26, appartenant respectivement à l'élément de mât 14 inférieur et à l'élément de mât 14 supérieur.

Selon le deuxième mode de réalisation, au cours de l'étape d'empilement, les éléments de mât 14 sont empilés de manière décalée angulairement de telle sorte que les lignes de jonction entre segments de paroi 16 de l'élément de mât 14 supérieur ne soient pas en regard des lignes de jonction entre segments de paroi 16 de l'élément de mât 14 inférieur.

Des simulations numériques ont permis de confirmer les avantages procurés par les connecteurs selon l'invention. L'effet le plus notable de cette amélioration est une réduction notable des contraintes maximales dans les deuxièmes connecteurs 30 ainsi que dans les connecteurs intermédiaires 36.

Par exemple, une des configurations de mât 1 calculée en respectant les codes de calcul en vigueur montre des réductions de ces contraintes de 8% par rapport aux contraintes que subirait le mât 1 si les deuxièmes connecteurs étaient de forme classique rectangulaire.

Les deuxièmes connecteurs 30 selon l'invention permettent également une augmentation de la valeur du premier mode propre du mât 2 et une amélioration de la résistance à l'instabilité globale de l'ordre de 30 MPa en termes de charge verticale maximale admissible.

Enfin, les deuxièmes connecteurs 30 selon l'invention permettent également une légère augmentation de la fréquence de résonnance.

Les valeurs qui viennent d'être présentées sont le fruit d'un calcul relatif à un mât d'éolienne 2 selon le premier mode de réalisation de l'invention, présentant les dimensions suivantes.

Le mât 2 présente une forme tronconique, à section transversale polygonale, et une hauteur de 140 mètres. Le diamètre du mât 2 varie de 9 m à sa base jusqu'à 4 m au sommet. Les segments de paroi 16 présentent chacun une hauteur de 12 m, et une épaisseur comprise entre 17 mm et 24 mm en fonction de leur position verticale sur le mât 2, l'épaisseur diminuant en direction du sommet du mât 2.

Le mât 2 comprend 20 facettes, la section transversale du mât 2 étant formée par un polygone à 20 côtés. La largeur des facettes varie de 1,4 m à 0,6 m en fonction de la position verticale sur le mât 2.

Le mât 2 est muni de premiers connecteurs 26 de forme rectangulaire de largeur égale à 200 mm et de hauteur variant en fonction de la position sur le mât 2 en moyenne de 11,59 m pour les premiers connecteurs 26 situés à la base du mât 2 à 11,17 m pour les premiers connecteurs 26 situés au sommet du mât 2.

Les deuxièmes connecteurs 30 présentent une forme octaédrique avec une portion de jonction 32 de forme trapézoïdale. La largeur L1 au sommet de la portion de jonction 32 est de 200 mm. L'angle α entre les bords du trapèze et sa base est égal à 45°. La portion centrale 34 est rectangulaire et présente une largeur L2 allant de 1,2 m à la base du mât 2 jusqu'à 0,6 m au sommet du mât 2, en fonction de la position verticale du deuxième connecteur 30 considéré sur le mât 2. La hauteur de la portion centrale 34 varie, en fonction de la position verticale du deuxième connecteur 34 considéré le long du mât 2, de 800 mm à la base du mât 2 à 400 mm au sommet du mât 2. La hauteur des deuxièmes connecteurs 30 va de 1,3 m à 0,6 m, selon leur position soit, respectivement, en bas et en haut de mât 2.

Les connecteurs intermédiaires 36 présentent une forme rectangulaire. Leur hauteur varie, selon leur position sur le mât 2, de 800 mm en bas du mât 2 à 400 mm en haut du mât 2. La largeur des connecteurs intermédiaires 36 varie de 1,2 m à la base du mât 2 à 0,6 m au sommet du mât 2, en fonction de la position verticale du connecteur 36 sur le mât 2.

Dans le cadre de ce calcul, l'épaisseur de tous les connecteurs 26, 30, 36 a été prise égale à 16 mm. On notera qu'en pratique, l'épaisseur des connecteurs 26, 30, 36 peut aller jusqu'à 18 mm, en fonction des sollicitations.

## Revendications

1. Tronçon de mât (1) pour éolienne présentant un axe central longitudinal (L) s'étendant suivant une direction longitudinale, le tronçon de mât (1) comprenant au moins deux éléments de mât (14) tubulaires empilés selon la direction longitudinale et agencés bord à bord au niveau d'un plan de jonction (P), chaque élément de mât (14) comprenant au moins deux segments de paroi (16), connectés entre eux par des premiers connecteurs (26) s'étendant le long des bords longitudinaux des segments de paroi (16), le tronçon de mât (1) comprenant en outre des deuxièmes connecteurs (30) s'étendant chacun à cheval sur les deux éléments de mât (14) adjacents selon la direction longitudinale,
**caractérisé en ce que** chaque deuxième connecteur (30) s'étend dans le prolongement longitudinal d'un premier connecteur (26), le deuxième connecteur (30) présentant une largeur augmentant, à partir dudit premier connecteur (26), d'une première largeur (L1) sensiblement égale à la largeur du premier connecteur (26) jusqu'à une deuxième largeur (L2) strictement supérieure à la première largeur (L1), la deuxième largeur (L2) étant atteinte avant le plan de jonction (P) en partant du premier connecteur (26).

2. Tronçon de mât (1) selon la revendication 1, lequel présente une forme tubulaire de section transversale polygonale, chaque côté de ce polygone définissant une facette du tronçon de mât (1).

3. Tronçon de mât (1) selon la revendication 2, dans lequel chaque deuxième connecteur (30) s'étend sur une facette du tronçon de mât (1) et la deuxième largeur (L2) est supérieure ou égale à 50% de la largeur de la facette sur laquelle s'étend le deuxième connecteur (30) considéré, prise au niveau du plan de jonction (P) entre les éléments de mât (14) adjacents.

4. Tronçon de mât (1) selon l'une quelconque des revendications précédentes, dans lequel chaque segment de paroi (16) comprend un pan central (18) et deux pans latéraux (20) formant un angle avec le pan central (18).

5. Tronçon de mât (1) selon l'une quelconque des revendications précédentes, dans lequel les deuxièmes connecteurs (30) sont symétriques par rapport à l'axe longitudinal du premier connecteur (26) qu'ils prolongent.

6. Tronçon de mât (1) selon l'une quelconque des revendications précédentes, dans lequel la largeur du deuxième connecteur (30) augmente linéairement de la première largeur (L1) jusqu'à la deuxième largeur (L2).

7. Tronçon de mât (1) selon la revendication 6, dans lequel chaque deuxième connecteur (30) comprend une portion centrale (34) sensiblement rectangulaire s'étendant à cheval sur les deux éléments de paroi (14) adjacents et au moins une portion de jonction (32) en forme de trapèze, s'étendant depuis un premier connecteur (26) respectif jusqu'à la portion centrale (34), la largeur de la portion de jonction (32) variant, depuis le premier connecteur (26), de la première largeur (L1) jusqu'à la deuxième largeur (L2).

8. Tronçon de mât (1) selon la revendication 7, dans lequel les bords du trapèze de la ou chaque portion de jonction (32) en forme de trapèze forment un angle (α) compris entre 30 et 55° avec la base du trapèze.

9. Tronçon de mât (1) selon l'une des revendications 7 et 8, dans lequel le deuxième connecteur (30) comprend deux portions de jonction (32) encadrant la portion centrale (34) selon la direction longitudinale.

10. Tronçon de mât (1) selon l'une quelconque des revendications précédentes, dans lequel chaque deuxième connecteur (30) est symétrique par rapport au plan de jonction (P).

11. Tronçon de mât (1) selon l'une quelconque des revendications précédentes, dans lequel les bords longitudinaux d'un segment de paroi (16) de l'élément de mât (14) supérieur se situent dans le prolongement des bords longitudinaux du segment de paroi (16) adjacent de l'élément de mât (14) inférieur.

12. Tronçon de mât (1) selon l'une quelconque des revendications 1 à 8, prise en combinaison avec la revendication 4, dans lequel les éléments de mât (14) adjacents sont décalés angulairement les uns par rapport aux autres, et dans lequel chaque deuxième connecteur (30) s'étend d'une part à cheval sur deux pans latéraux (20) adjacents circonférentiellement de l'un des éléments de mât (14) et d'autre part sur un pan central (18) de l'autre élément de mât (14).

13. Tronçon de mât (1) selon l'une quelconque des revendications précédentes, lequel comprend en outre des connecteurs intermédiaires (36) disposés à cheval sur deux éléments de mât (14) adjacents, entre deux deuxièmes connecteurs (30) adjacents circonférentiellement.

14. Tronçon de mât (1) selon la revendication 13, prise en combinaison avec la revendication 4, dans lequel chaque connecteur intermédiaire (36) s'étend à cheval sur deux pans centraux (18) adjacents longitudinalement des deux éléments de mât (14) et chaque deuxième connecteur (30) s'étend à cheval sur deux pans latéraux adjacents circonférentiellement de chacun des éléments de mât (14) adjacents.

15. Mât d'éolienne (2) comprenant un tronçon de mât (1) selon l'une quelconque des revendications précédentes.

16. Procédé d'assemblage d'un tronçon de mât (1) selon l'une quelconque des revendications 1 à 14, comprenant :
- la fourniture de segments de paroi (16) et l'assemblage de ces segments de paroi (16) entre eux par l'intermédiaire des premiers connecteurs (26) de sorte à former des éléments de mât (14) ;
- l'empilement, selon la direction longitudinale, de deux éléments de mât (14) et la connexion entre eux de ces deux éléments de mât (14) au moyen des deuxièmes connecteurs (26).

## Patentansprüche

1. Turmabschnitt (1) für eine Windkraftanlage, welcher eine zentrale Längsachse (L) aufweist, die sich entlang einer Längsrichtung erstreckt, wobei der Turmabschnitt (1) zumindest zwei rohrförmige Turmelemente (14) aufweist, welche entlang der Längsrichtung aufeinandergestapelt sind und in einer Verbindungsebene (P) auf Stoß verbunden sind, wobei jedes Turmelement (14) zumindest zwei Wandsegmente (16) aufweist, die durch erste Verbinder (26) miteinander verbunden sind, welche sich an Längsrändern der Wandsegmente (16) entlang erstrecken, wobei der Turmabschnitt (1) ferner zweite Verbinder (30) aufweist, von welchen sich jeder zwischen und auf den zwei Turmelementen (14) erstreckt, die in der Längsrichtung benachbart sind,
**dadurch gekennzeichnet, dass** sich jeder der zweiten Verbinder (30) in der Längsverlängerung eines ersten Verbinders (26) erstreckt, der zweite Verbinder (30) ausgehend vom besagten ersten Verbinder (26) eine zunehmende Größe hat, von einer ersten Größe (L1), welche im Wesentlichen gleich zur Größe des ersten Verbinders (26) ist, bis zu einer zweiten Größe (L2), welche größer ist als die erste Größe (L1), wobei die zweite Größe (L2) beim Wegbegeben vom ersten Verbinder (26) vor der Verbindungsebene (P) erreicht wird.

2. Turmabschnitt (1) gemäß Anspruch 1, welcher in einem Querschnitt eine Polygonal-Rohrform aufweist, wobei jede Seite dieses Polygons eine Facette des Turmabschnitts (1) definiert.

3. Turmabschnitt (1) gemäß Anspruch 2, bei welchem auf dem Niveau der Verbindungsebene (P) zwischen den benachbarten Turmelementen (14) sich jeder zweite Verbinder (30) auf einer Facette des Turmabschnitts (1) erstreckt und die zweite Größe (L2) größer oder gleich 50% der Größe der Facette ist, auf welcher sich der betrachtete zweite Verbinder (30) erstreckt.

4. Turmabschnitt (1) gemäß irgendeinem der vorhergehenden Ansprüche, bei welchem jedes Wandsegment (16) einen Zentralteil (18) und zwei Lateralteile (20) aufweist, welche einen Winkel zum Zentralteil (18) bilden.

5. Turmabschnitt (1) gemäß irgendeinem der vorhergehenden Ansprüche, bei welchem die zweiten Verbinder (30) mit Bezug auf die Längsachse des ersten Verbinders (26), welchen diese verlängern, symmetrisch sind.

6. Turmabschnitt (1) gemäß irgendeinem der vorhergehenden Ansprüche, bei welchem die Größe des zweiten Verbinders (30) von der ersten Größe (L1) bis zur zweiten Größe (L2) linear zunimmt.

7. Turmabschnitt (1) gemäß Anspruch 6, bei welchem jeder zweite Verbinder (30) einen Zentralabschnitt (34), welcher sich im Wesentlichen zwischen und auf den zwei benachbarten Wandsegmenten (14) rechteckig erstreckt, und zumindest einen als ein Trapez geformten Verbindungsabschnitt (32) aufweist, welcher sich von einem ersten Verbinder (26) bis zum jeweiligen Zentralabschnitt (34) erstreckt, wobei die Größe des Verbindungsabschnitts (32) von dem ersten Verbinder (26) ab von der ersten Größe (L1) bis zur zweiten Größe (L2) variiert.

8. Turmabschnitt (1) gemäß Anspruch 7, bei welchem die Ränder des Trapezes von einem oder jedem Verbindungsabschnitt (32), welcher als Trapez geformt ist, einen Winkel (α) mit der Basis des Trapezes bilden, welcher zwischen 30 und 55° liegt.

9. Turmabschnitt (1) gemäß einem der Ansprüche 7 und 8, bei welchem der zweite Verbinder (30) zwei Verbindungsabschnitte (32) aufweist, welche den Zentralabschnitt (34) entlang der Längsrichtung flankieren.

10. Turmabschnitt (1) gemäß irgendeinem der vorhergehenden Ansprüche, bei welchem jeder zweite Verbinder (30) mit Bezug auf die Verbindungsebene (P) symmetrisch ist.

11. Turmabschnitt (1) gemäß irgendeinem der vorhergehenden Ansprüche, bei welchem die Längsränder eines Wandsegments (16) des oberen Turmelements (14) auf der Verlängerung von Längsränder des benachbarten Wandsegments (16) des unteren Turmelements (14) angeordnet sind.

12. Turmabschnitt (1) gemäß irgendeinem der Ansprüche 1 bis 8, in Kombination mit dem Anspruch 4, bei welchem die benachbarten Turmelemente (14) gegeneinander winkelmäßig versetzt sind und bei welchem sich jeder zweite Verbinder (30) zum einen Teil zwischen und auf zwei Lateralteilen (20) erstreckt, welche von dem einen der Turmelemente (14) umfangsmäßig benachbart sind, und zum anderen Teil auf einem Zentralteil (18) des anderen Turmelements (14) erstreckt.

13. Turmabschnitt (1) gemäß irgendeinem der vorhergehenden Ansprüche, welcher ferner Zwischenverbinder (36) aufweist, die zwischen und auf zwei benachbarten Turmelementen (14) zwischen zwei umfangsmäßig benachbarten zweiten Verbindern (30) angeordnet sind.

14. Turmabschnitt (1) gemäß Anspruch 13, in Kombination mit dem Anspruch 4, bei welchem sich jeder Zwischenverbinder (36) zwischen und auf zwei Zentralteilen (18) erstreckt, die in Längsrichtung der zwei Turmelemente (14) benachbart sind, und wobei sich jeder zweite Verbinder (30) zwischen und auf zwei umfangsmäßig benachbarten Lateralteilen von jedem der benachbarten Turmelemente (14) erstreckt.

15. Windkraftanlagenturm (2), welcher einen Turmabschnitt (1) gemäß irgendeinem der vorhergehenden Ansprüche aufweist.

16. Zusammenbauverfahren eines Turmabschnitts (1) gemäß irgendeinem der Ansprüche 1 bis 14, aufweisend:
- Bereitstellen von Wandsegmenten (16) und Zusammenbauen dieser Wandsegmente (16) miteinander durch Zwischenabringen von ersten Verbindern (26) in der Art des Ausbildens von Turmelementen (14),
- Aufeinanderstapeln, entlang der Längsrichtung, zweier Turmelemente (14) und Verbinden dieser zwei Turmelemente (14) miteinander mittels zweiter Verbinder (30).

## Claims

1. A tower section (1) for a wind turbine having a longitudinal central axis (L) extending along a longitudinal direction, the tower section (1) comprising at least two tubular tower elements (14) stacked along the longitudinal direction and arranged edge-to-edge at a joining plane (P), each tower element (14) comprising at least two wall segments (16), connected to one another by first connectors (26) extending along longitudinal edges of the wall segments (16), the tower section (1) further comprising second connectors (30) each extending astride the two adjacent tower elements (14) along the longitudinal direction,
**characterized in that** each second connector (30) extends in the longitudinal extension of a first connector (26), the second connector (30) having a width increasing, from said first connector (26), from a first width (L1) substantially equal to the width of the first connector (26) to a second width (L2) strictly larger than the first width (L1), the second width (L2) being reached before the joining plane (P) starting from the first connector (26).

2. The tower section (1) according to claim 1, having a tubular shape with a polygonal cross-section, each side of this polygon defining a facet of the tower section (1).

3. The tower section (1) according to claim 2, wherein each second connector (30) extends over a facet of the tower section (1) and the second width (L2) is greater than or equal to 50% of the width of the facet on which the considered second connector (30) extends, taken at the joining plane (P) between the adjacent tower elements (14).

4. The tower section (1) according to any one of the preceding claims, wherein each wall segment (16) comprises a central panel (18) and two side panels (20) forming an angle with the central panel (18).

5. The tower section (1) according to any one of the preceding claims, wherein the second connectors (30) are symmetrical relative to the longitudinal axis of the first connector (26) that they extend.

6. The tower section (1) according to any one of the preceding claims, wherein the width of the second connector (30) increases linearly from the first width (L1) to the second width (L2).

7. The tower section (1) according to claim 6, wherein each second connector (30) comprises a substantially rectangular central portion (34) extending astride the two adjacent wall elements (14) and at least one trapezoidal joining portion (32), extending from a first respective connector (26) to the central portion (34), the width of the joining portion (32) varying, from the first connector (26), from the first width (L1) to the second width (L2).

8. The tower section (1) according to claim 7, wherein the edges of the trapezoid of the or each trapezoidal joining portion (32) form an angle (α) comprised between 30 and 55° with the base of the trapezoid.

9. The tower section (1) according to one of claims 7 and 8, wherein the second connector (30) comprises two joining portions (32) framing the central portion (34) along the longitudinal direction.

10. The tower section (1) according to any one of the preceding claims, wherein each second connector (30) is symmetrical relative to the joining plane (P).

11. The tower section (1) according to any one of the preceding claims, wherein the longitudinal edges of a wall segment (16) of the upper tower element (14) are situated in the extension of the longitudinal edges of the adjacent wall segment (16) of the lower tower element (14).

12. The tower section (1) according to any one of claims 1 to 8, combined with claim 4, wherein the adjacent tower elements (14) are angularly offset from one another, and each second connector (30) extends on the one hand astride two circumferentially adjacent side panels (20) of one of the tower elements (14) and on the other hand on a central panel (18) of the other tower element (14).

13. The tower section (1) according to any one of the preceding claims, which further comprises intermediate connectors (36) arranged astride two adjacent tower elements (14), between two circumferentially adjacent second connectors (30).

14. The tower section (1) according to claim 13, combined with claim 4, wherein each intermediate connector (36) extends astride two longitudinally adjacent central panels (18) of the two tower elements (14) and each second connector (30) extends astride two circumferentially adjacent side panels of each of the adjacent tower elements (14).

15. A wind turbine tower (2) comprising a tower section (1) according to any one of the preceding claims.

16. A method for assembling a tower section (1) according to any one of claims 1 to 14, comprising:
- providing wall segments (16) and assembling these wall segments (16) to one another via first connectors (26) so as to form tower elements (14);
- stacking, along the longitudinal direction, two tower elements (14) and connecting these two tower elements (14) to one another using second connectors (26).
